(19) Europäisches Patentamt / European Patent Office / Office européen des brevets

(11) **EP 4 349 205 B1**

(12) **EUROPEAN PATENT SPECIFICATION**

(45) Date of publication and mention of the grant of the patent:
**01.07.2026 Bulletin 2026/27**

(21) Application number: **22811345.2**

(22) Date of filing: **25.05.2022**

(51) International Patent Classification (IPC):
**A43D 1/02** *(2006.01)* **G01B 11/24** *(2006.01)*

(52) Cooperative Patent Classification (CPC):
**G06Q 30/0631; A43D 1/025; G06Q 30/015; G06Q 30/0621; G06Q 30/0623;** G01B 11/24

(86) International application number:
**PCT/JP2022/021365**

(87) International publication number:
**WO 2022/250075 (01.12.2022 Gazette 2022/48)**

(54) **FOOT SHAPE MEASUREMENT SYSTEM AND FOOT SHAPE MEASUREMENT METHOD**

FUSSFORMMESSSYSTEM UND FUSSFORMMESSVERFAHREN

SYSTÈME DE MESURE DE FORME DE PIED ET PROCÉDÉ DE MESURE DE FORME DE PIED

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2021 JP 2021090163**

(43) Date of publication of application:
**10.04.2024 Bulletin 2024/15**

(73) Proprietor: **WACOAL CORP.**
**Kyoto-shi, Kyoto 601-8530 (JP)**

(72) Inventors:
• **ARAYAMA Motohide**
**Osaka-shi, Osaka 556-0004 (JP)**
• **SEIKE Nozomu**
**Kyoto-shi, Kyoto 601-8530 (JP)**

(74) Representative: **Weickmann & Weickmann PartmbB**
**Postfach 860 820**
**81635 München (DE)**

(56) References cited:
WO-A1-02/40941          JP-A- 2000 090 272
JP-A- 2002 177 015     US-A1- 2017 270 709
US-A1- 2018 177 624     US-A1- 2018 253 079

## Description

## Technical Field

The present disclosure relates to a foot shape measurement system and a foot shape measurement method, and more particularly to a foot shape measurement system and a foot shape measurement method capable of calculating an index for selecting a ready-made shoe.

## Background Art

A technique for selecting a ready-made shoe that matches a three-dimensional shape of a foot using 3D data obtained by measuring the three-dimensional shape of the foot is known (see, for example, JP 2003-108831 A).

## Citation List

[0003] - US 2017/270709 A1 discloses al list of discrete anatomical landmarks, such as "(1) Rearest point of the Heel" and "(4) Insertion of Achille's tendon in Calcaneus". There, a "Measuring" function "calculates distances between points in the model".

## Summary of Invention

## Technical Problem

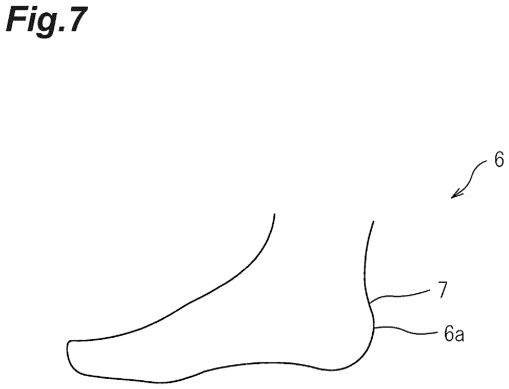

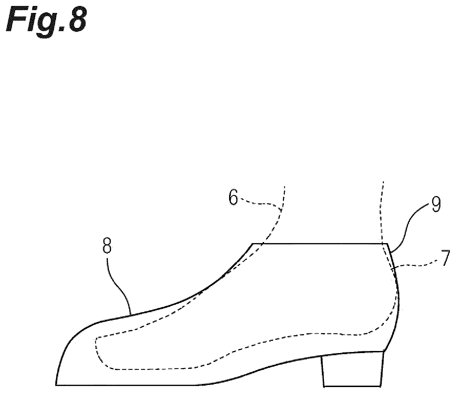

FIG. 7 is a schematic view of a foot 6. FIG. 8 is a schematic view of a shoe 8. When a shape of a heel upper portion 7 above a most protruding portion 6a of a rear portion of the foot 6 illustrated in FIG. 7 and a shape of a heel portion 9 of the shoe 8 illustrated in FIG. 8 correspond well to each other, the heel upper portion 7 of the foot 6 is caught by the heel portion 9 of the shoe 8 when walking while wearing the shoe 8, and the shoe 8 is not removed. When the shape of the heel upper portion 7 of the foot 6 and the shape of the heel portion 9 of the shoe 8 do not correspond well each other, the rear portion of the foot 6 rises when walking, and the shoe 8 is easily removed.

When ready-made shoes having different shapes of the heel portion 9 of the shoe 8 corresponding to the difference in the shape of the heel upper portion 7 of the foot 6 are manufactured, it is possible to select a ready-made shoe that matches the shape of the heel upper portion 7 of the foot 6.

However, with respect to a size of a ready-made shoe, a foot length, a foot circumference, a foot width, and the like are defined in the JIS standard and the like, but a shape of a rear portion of the foot 6 is not defined. Therefore, it is difficult to select a ready-made shoe that matches the shape of the rear portion of the foot 6.

The present disclosure describes a foot shape measurement system and a foot shape measurement method that facilitate selection of a ready-made shoe that matches the shape of the rear portion of the foot.

## Solution to Problem

In order to solve the above problem, the present disclosure provides a foot shape measurement system configured as follows.

A foot shape measurement system includes (a) an input reception unit configured to receive an input of 3D data representing a three-dimensional shape of a foot, and (b) a feature parameter calculation unit configured to calculate a feature parameter of the foot based on the 3D data. The feature parameter calculation unit includes (i) a distance calculation unit configured to calculate, for a rear portion of the foot viewed from a lateral direction, a distance between a protrusion point that protrudes most within a heel range and a retraction point that retracts most within an Achilles tendon range in a foot length direction.

According to the above configuration, the distance calculated by the distance calculation unit can be used as an index for selecting a ready-made shoe. By arranging ready-made shoes according to the distance, it is easy to select a ready-made shoe that matches the shape of the rear portion of the foot.

Preferably, the feature parameter calculation unit further includes (ii) a foot length calculation unit configured to calculate a foot length of the foot, and (iii) a heel index calculation unit configured to calculate a heel index that is a ratio of the distance to the foot length.

In this case, the heel index calculated by the heel index calculation unit can be used as an index for selecting a ready-made shoe. By arranging ready-made shoes according to the heel index, it is easy to select a ready-made shoe that matches a shape of a rear portion of the foot. When a ready-made shoe is designed so that, even when a foot length is different, when a heel index is the same, a shape of a heel portion of the shoe is the same, it is easy to manufacture and select a ready-made shoe.

Preferably, the feature parameter calculation unit further includes (iv) a classification determination unit configured to determine a classification to which the heel index belongs.

In this case, the classification to which the heel index belongs can be used as an index for selecting a ready-made shoe. By arranging ready-made shoes having different shapes of the heel portion for each classification to which the heel index belongs, it is easy to manufacture and select a ready-made shoe.

Preferably, the distance calculation unit calculates the heel range and the Achilles tendon range based on the foot length, and calculates the distance between the protrusion point that protrudes most within the calculated heel range and the retraction point that retracts most within the calculated Achilles tendon range.

In this case, the heel range and the Achilles tendon range can be appropriately set according to the foot length.

The foot shape measurement system further includes (c) a measurement unit configured to measure a three-dimensional shape of the foot, and (d) a 3D data generation unit configured to generate 3D data representing the three-dimensional shape of the foot based on the data measured by the measurement unit. The input reception unit receives an input of the 3D data generated by the 3D data generation unit.

In this case, a function of calculating an index related to the shape of the rear portion of the foot can be incorporated in a foot measurement system that measures the three-dimensional shape of the foot and calculates a representative index such as a foot length and a foot circumference.

Further, in order to solve the above problems, the present disclosure provides a foot shape measurement method configured as follows.

A foot shape measurement method for measuring a shape feature of a foot, the foot shape measurement method including (i) a protrusion point specifying step of specifying a protrusion point that protrudes most within a heel range for a rear portion of the foot viewed from a lateral direction, (ii) a retraction point specifying step of specifying a retraction point that retracts most within an Achilles tendon range for the rear portion of the foot viewed from the lateral direction, and (iii) a distance measuring step of measuring a distance between the protrusion point and the retraction point in a foot length direction, by the distance calculation unit.

According to the above method, by arranging ready-made shoes according to the distance measured in the distance measuring step, it is easy to select a ready-made shoe that matches the shape of the rear portion of the foot.

Preferably, the foot shape measurement method further includes (iv) a foot length calculating step of calculating a foot length of the foot, and (v) a heel index calculating step of calculating a heel index that is a ratio of the distance to the foot length.

In this case, the classification to which the heel index belongs can be used as an index for selecting a ready-made shoe. By arranging ready-made shoes having different shapes of the heel portion for each classification to which the heel index belongs, it is easy to manufacture and select a ready-made shoe.

**Advantageous Effects of Invention**

According to the present disclosure, it is possible to calculate a feature parameter related to a shape of a rear portion of a foot. By arranging ready-made shoes using the feature parameter related to the shape of the rear portion of the foot as an index, it is easy to select a ready-made shoe that matches the shape of the rear portion of the foot.

**Brief Description of Drawings**

FIG. 1 is a block diagram of a foot shape measurement system (first embodiment).
FIG. 2 is a block diagram of a feature parameter calculation unit (first embodiment).
FIG. 3(a) is a schematic view of a foot viewed from a lateral direction, and FIG. 3(b) is a schematic view of the foot viewed from above (first embodiment).
FIG. 4 is an image output from a printer (first embodiment).
FIG. 5 is a block diagram of a foot shape measurement system (second embodiment).
FIG. 6 is an image displayed on a screen (second embodiment).
FIG. 7 is a schematic view of a foot.
FIG. 8 is a schematic view of a foot.

**Description of Embodiments**

Hereinafter, a foot shape measurement system and a foot shape measurement method of the present disclosure will be described with reference to the drawings.

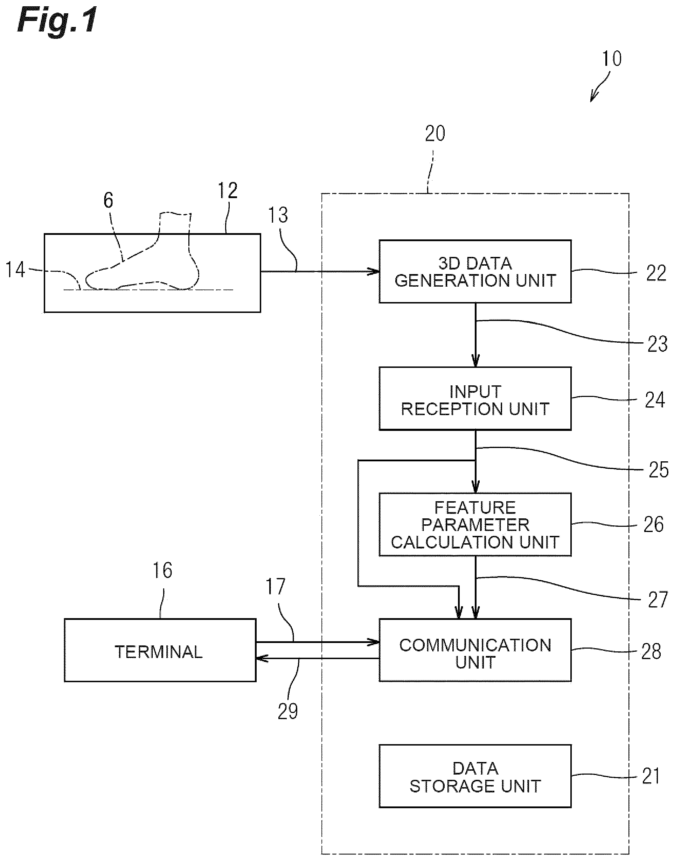

<First Embodiment> A foot shape measurement system 10 according to the first embodiment will be described with reference to FIGS. 1 to 4. The foot shape measurement system 10 executes a foot shape measurement method that is a measurement method for acquiring a shape feature of a foot.

FIG. 1 is a block diagram illustrating an overall configuration of the foot shape measurement system 10. As illustrated in FIG. 1, the foot shape measurement system 10 includes a measurement unit 12, a terminal 16, and a data processing unit 20. The measurement unit 12 and the terminal 16 are coupled to the data processing unit 20 directly or via a communication network such as the Internet. For example, the data processing unit 20 is configured using one or a plurality of servers. For example, the data processing unit 20 is configured as a computer device including a processor such as a CPU, a memory such as a ROM and a RAM, a storage, a communication device, and the like. For example, the terminal 16 is a smartphone, a tablet terminal, a personal computer, or the like. The data processing unit 20 and the terminal 16 may be configured using one common personal computer.

The measurement unit 12 measures a three-dimensional shape of a foot 6. For example, the measurement unit 12 is configured to measure a shape of the foot 6 placed on a transparent plate 14 by a light cutting method. Data 13 measured by the measurement unit 12 is transmitted to the data processing unit 20.

The data processing unit 20 includes a 3D data generation unit 22, an input reception unit 24, a feature parameter calculation unit 26, a communication unit 28, and a data storage unit 21.

The 3D data generation unit 22 generates 3D data 23 representing the three-dimensional shape of the foot 6 based on the data 13 transmitted from the measurement unit 12 to the data processing unit 20.

The input reception unit 24 receives an input of the 3D data 23 generated by the 3D data generation unit 22, and sends 3D data 25 having received the input to the feature parameter calculation unit 26 and the communication unit 28.

The feature parameter calculation unit 26 calculates various feature parameters 27 of the foot 6 based on the 3D data 25 sent from the input reception unit 24, and transmits the feature parameters to the communication unit 28.

The communication unit 28 receives data 17 from the terminal 16 and transmits data 29 to the terminal 16. For example, based on the data 17 transmitted in response to the operation on the terminal 16, the communication unit 28 generates the data 29 for displaying a three-dimensional image of the 3D data 25 sent from the input reception unit 24, the feature parameter 27 sent from the feature parameter calculation unit 26, or the like on the screen of the terminal 16 or outputting the same to a printer (not illustrated) coupled to the terminal 16. The communication unit 28 transmits the generated data 29 to the terminal 16.

The data storage unit 21 appropriately stores the 3D data 23 generated by the 3D data generation unit 22, the feature parameter 27 calculated by the feature parameter calculation unit 26, and the like as necessary.

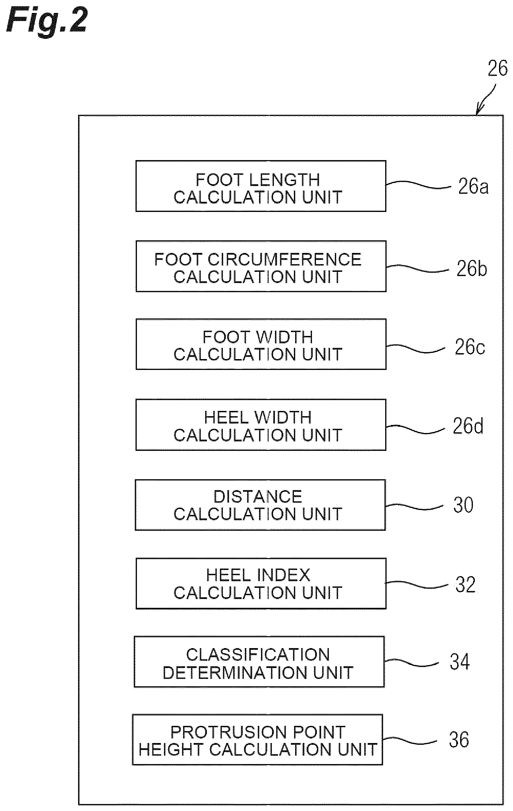

FIG. 2 is a block diagram of the feature parameter calculation unit 26. As illustrated in FIG. 2, the feature parameter calculation unit 26 includes a foot length calculation unit 26a that calculates a foot length, a foot circumference calculation unit 26b that calculates a foot circumference, a foot width calculation unit and the like 26c that calculates a foot width, and a heel width calculation unit 26d that calculates a heel width. The feature parameter calculation unit 26 further includes a distance calculation unit 30, a heel index calculation unit 32, and a classification determination unit 34 that calculate feature parameters related to the shape of the rear portion of the foot 6. Note that the heel index calculation unit 32 and/or the classification determination unit 34 may be omitted from the feature parameter calculation unit 26.

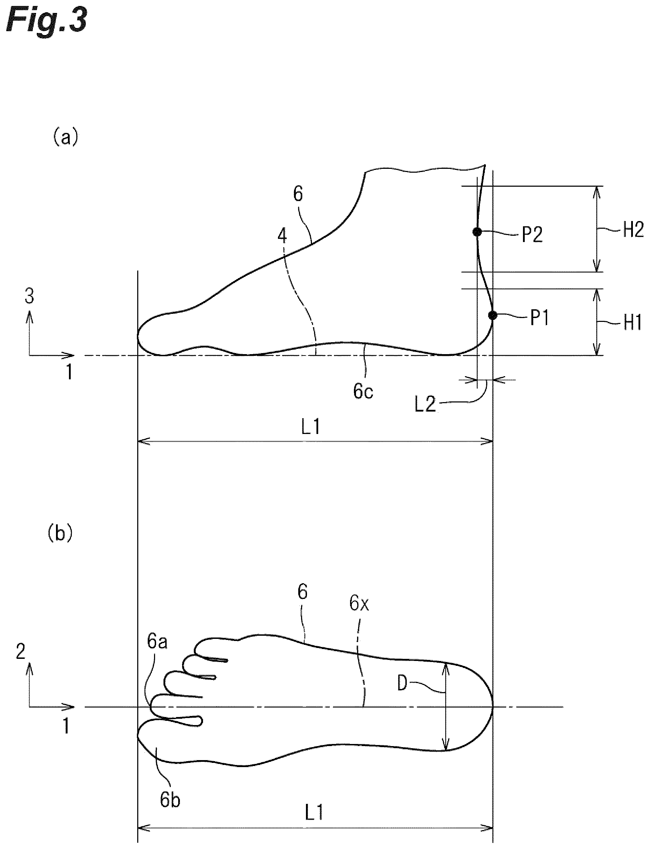

The feature parameter related to the shape of the rear portion of the foot 6 will be described with reference to FIGS. 3(a) and 3(b). FIG. 3(a) is a schematic view of the foot 6 of which a sole 6c is in contact with a plane 4 as viewed from a lateral direction (left-right direction of the foot 6). FIG. 3(b) is a schematic view of the foot 6 viewed from above the plane 4.

As illustrated in FIGS. 3(a) and 3(b), a direction of a center line 6x of the foot passing through a second toe end 6a of the foot 6 is defined as a first direction 1 (front-rear direction 1), and a distance from a heel rear end of the foot 6 to a longest toe (for example, 6b) in the first direction 1 is defined as a foot length L1. A direction parallel to the plane 4 and intersecting (typically orthogonal to) the first direction 1 is defined as a second direction 2 (left-right direction 2), and a direction intersecting (typically orthogonal to) the plane 4 is defined as a third direction 3 (height direction 3).

The first direction 1 and foot length L1 may be defined differently from the above. For example, a direction of a boundary line between left and right feet when the left and right feet are arranged to be in contact with each other may be defined as the first direction 1, and a maximum length of each of the left and right feet in the first direction 1 may be defined as the foot length L1.

The foot length calculation unit 26a (see FIG. 2) executes a step of the foot shape measurement method, that is, a foot length calculating step of calculating the foot length L1 of the foot 6.

As illustrated in FIG. 3(a), when the rear portion of the foot 6 is viewed from the second direction 2, a point that protrudes most within a heel range H1 is defined as a protrusion point P1, a point that retracts most within an Achilles tendon range H2 is defined as a retraction point P2, and a distance between the protrusion point P1 and the retraction point P2 is defined as L2 in the foot length direction (first direction 1). An upper limit of the heel range H1 and a lower limit of the Achilles tendon range H2 may coincide with each other, or the heel range H1 and the Achilles tendon range H2 may overlap each other.

A ratio (%) of the distance L2 to the foot length L1 is defined as a heel index. When the heel index is H,

$$H = (L2/L1) \times 100 \quad ... \quad (Formula\ 1).$$

The distance calculation unit 30 calculates the distance L2 between the protrusion point P1 and the retraction point P2 for the rear portion of the foot 6 viewed from the lateral direction (second direction 2) based on the 3D data 25 of which the input has been received by the input reception unit 24. For example, the distance calculation unit 30 sequentially calculates coordinate values of the rear end (the end opposite to the toe in the first direction 1) of a contour line of the foot 6 in the first direction 1 in each cross section while changing a cross-sectional position in the third direction 3 (height direction 3) with respect to the cross section of the foot 6 parallel to the plane 4. The distance calculation unit 30 extracts coordinate values of the rearmost side (side opposite to the toe) within the heel range H1 and coordinate values of the foremost side (toe side) within the Achilles tendon range H2 with respect to the coordinate values of the rear end in the first direction 1 in each cross section. The distance calculation unit 30 calculates an absolute value of the difference between the extracted coordinate values as the distance L2.

The distance calculation unit 30 executes steps of the foot shape measurement method, that is, (i) a protrusion point specifying step of specifying a protrusion point P1 that protrudes most within the heel range H1 for the rear portion of the foot 6 viewed from the lateral direction (second direction 2), (ii) a retraction point specifying step of specifying a retraction point P2 that retracts most within the Achilles tendon range H2 for the rear portion of the foot 6 viewed from the lateral direction, and (iii) a distance measuring step of measuring a distance L2 between the protrusion point P1 and the retraction point P2 in the foot length direction (first direction 1).

The heel range H1 and the Achilles tendon range H2 may be a predetermined fixation range or may be individually determined based on the foot length L1 calculated by the foot length calculation unit 26a. For example, the foot length L1 calculated by the foot length calculation unit 26a may be multiplied by a predetermined coefficient to determine a range of the heel range H1 and the Achilles tendon range H2, that is, a cross-sectional height (coordinate values in the third direction 3).

The Achilles tendon range H2 may be determined by multiplying the height of the protrusion point P1 by a coefficient in a predetermined range, or may be determined by adding a dimension in a predetermined range to the height of the protrusion point P1.

In addition, an upper limit value and a lower limit value of the Achilles tendon range H2 may be the same. For example, the height of the Achilles tendon range H2 may be one height obtained by multiplying the height of the protrusion point P1 by a constant coefficient, or may be one height obtained by adding a constant dimension to the height of the protrusion point P1.

The heel index calculation unit 32 calculates a heel index H indicating a ratio of the distance L2 to the foot length L1, from the foot length L1 calculated by the foot length calculation unit 26a and the distance L2 calculated by the distance calculation unit 30 using (Formula 1).

The heel index calculation unit 32 executes a step of the foot shape measurement method, that is, a heel index calculating step of calculating a heel index H which is a ratio of the distance L2 to the foot length L1.

The classification determination unit 34 determines a classification to which the heel index H calculated by the heel index calculation unit 32 belongs, and calculates classification data corresponding to the classification. For example, when the heel index H is less than 3%, it is determined that the classification is A. When the heel index H is 3% or more and less than 5%, it is determined that the classification is B. When the heel index H is 5% or more, it is determined that the classification is C.

At least one of the distance, the heel index, and the classification to which the heel index belongs is displayed on a screen of the terminal 16 together with the foot length or the like, is displayed on a screen of a display device (not illustrated) that is disposed adjacent to the measurement unit 12 and that displays a measurement method or the like, or is output from a printer (not illustrated) disposed adjacent to the measurement unit 12 or a printer (not illustrated) coupled to the terminal 16.

Note that the feature parameter calculation unit 26 may or may not include a protrusion point height calculation unit 36 that calculates a height (coordinate values in the third direction 3) of the protrusion point P1 of the foot 6.

Next, an outline of data processing executed by the foot shape measurement system 10 will be described.

Data 13 measured by the measurement unit 12 is transmitted to the data processing unit 20. In the data processing unit 20, the 3D data generation unit 22 generates 3D data 23 based on the data 13 from the measurement unit 12, and the input reception unit 24 receives an input of the generated 3D data 23. 3D data 25 of which the input has been received by the input reception unit 24 is sent to the feature parameter calculation unit 26 and the communication unit 28. The feature parameter calculation unit 26 calculates a foot length L1, a distance L2, a heel index H, and the like based on the 3D data 25 of which the input has been received by the input reception unit 24, determines a classification to which the heel index H belongs, and calculates classification data assigned to the classification to which the heel index belongs. These feature parameters 27 calculated by the feature parameter calculation unit 26 are sent to the communication unit 28. The communication unit 28 transmits data 29 for displaying or printing the feature parameters 27 in an appropriate format to the terminal 16 or the like.

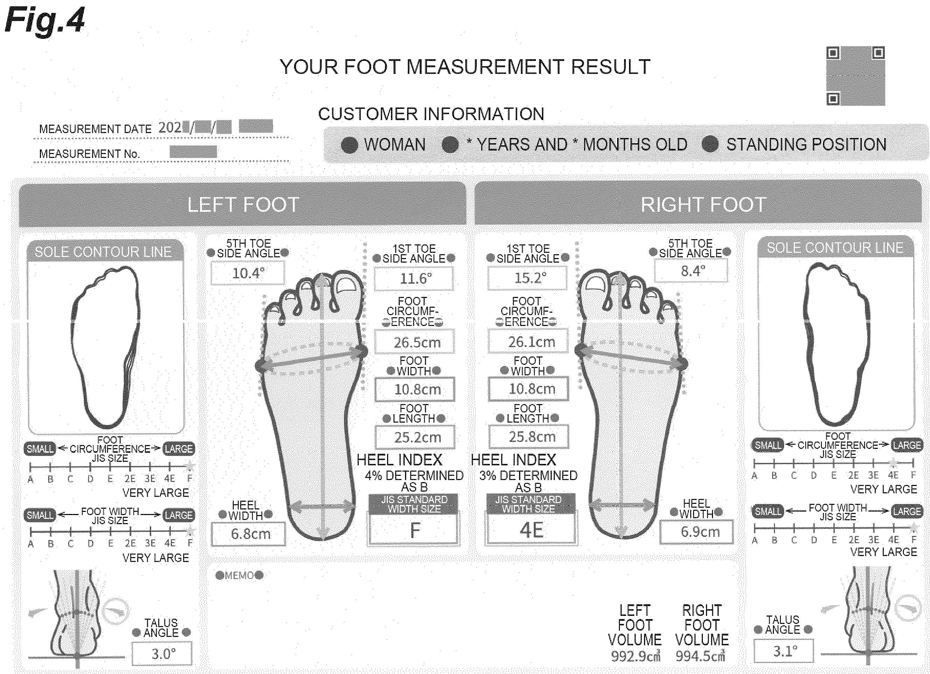

FIG. 4 is an example of an image output from a printer (not illustrated) based on the data 29 transmitted from the communication unit 28. As illustrated in FIG. 4, the heel index and the classification to which the heel index belongs are printed below the foot length of each of the left and right feet.

The distance L2, the heel index H, and the classification to which the heel index H belongs obtained by the foot shape measurement system 10 can be used as indices for selecting a ready-made shoe.

When a ready-made shoe is designed so that, even when the foot length L1 is different, when the heel index H is the same, the shape of the heel portion of the shoe is the same, it is easy to manufacture and select a ready-made shoe.

By manufacturing ready-made shoes having different shapes of the heel portion for each classification to which the heel index H belongs, it is easy to manufacture and select a ready-made shoe.

The foot shape measurement system 10 can incorporate a function of calculating an index related to the shape of the rear portion of the foot into a foot measurement system that measures the three-dimensional shape of the foot and calculates a representative index such as a foot length.

A foot shape measurement method executed by the foot shape measurement system 10 includes (i) a protrusion point specifying step of specifying a protrusion point that protrudes most within a heel range for a rear portion of the foot viewed from a lateral direction, (ii) a retraction point specifying step of specifying a retraction point that retracts most within an Achilles tendon range for the rear portion of the foot viewed from the lateral direction, and (iii) a distance measuring step of measuring a distance between the protrusion point and the retraction point in a foot length direction, and further, (iv) a foot length calculating step of calculating a foot length of the foot, and (v) a heel index calculating step of calculating a heel index that is a ratio of the distance to the foot length.

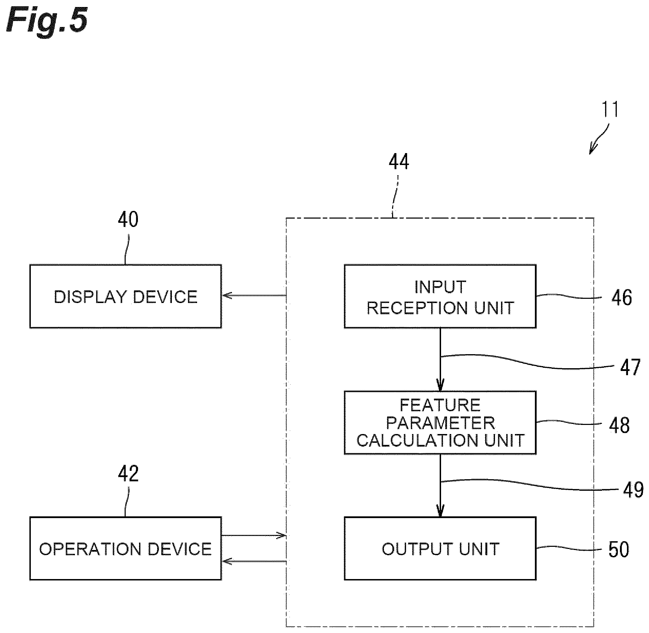

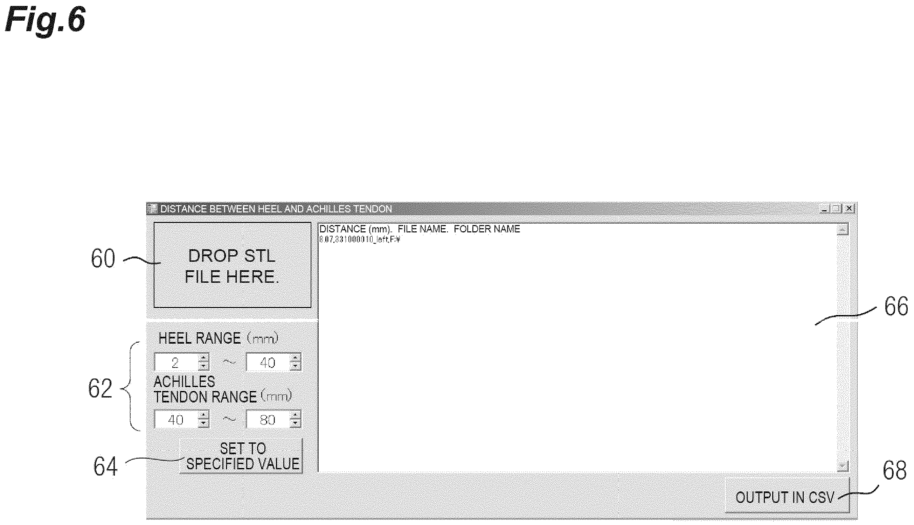

<Second Embodiment> A foot shape measurement system 11 according to a second embodiment will be described with reference to FIGS. 5 and 6. The foot shape measurement system 11 according to the second embodiment has the same configuration as a part of the foot shape measurement system 10 according to the first embodiment, and calculates a feature parameter by using 3D data of the foot already measured and generated. The foot shape measurement system 11 executes a foot shape measurement method similarly to the foot shape measurement system 10 according to the first embodiment. Hereinafter, differences from the first embodiment will be mainly described.

FIG. 5 is a block diagram of the foot shape measurement system 11 according to the second embodiment. As illustrated in FIG. 5, the foot shape measurement system 11 includes a display device 40 that displays an image on a liquid crystal panel or the like, an operation device 42 such as a touch pad or a mouse, and an information processing device 44. The foot shape measurement system 11 is configured using a server, a personal computer, or the like. The display device 40, the operation device 42, and the information processing device 44 can be integrally configured using a notebook computer.

The information processing device 44 includes an input reception unit 46, a feature parameter calculation unit 48, and an output unit 50. The information processing device 44 may be configured to be distributed to a plurality of servers or the like.

The input reception unit 46 receives an input of 3D data representing a three-dimensional shape of a foot. For example, 3D data generated by measuring the three-dimensional shape of the foot and stored in a database (not illustrated), a USB memory, or the like is input to the input reception unit 46.

Similarly to the first embodiment, the feature parameter calculation unit 48 calculates a feature parameter of the foot based on 3D data 47 of which the input has been received by the input reception unit 46. The feature parameter calculation unit 48 is configured in the same manner as in the first embodiment (see FIG. 2), includes a distance calculation unit, a heel index calculation unit, and a classification determination unit together with a foot length calculation unit and the like, and calculates feature parameters 49 such as a foot length, a distance, a heel index, and classification data assigned to a classification to which the heel index belongs.

The output unit 50 generates data to be displayed on the screen of the display device 40 or data to be printed by a printer (not illustrated) based on the various feature parameters 49 calculated by the feature parameter calculation unit 48 according to the operation of the operation device 42, and outputs the generated data to the display device 40 or the like.

FIG. 6 is an example of an image displayed on the screen of the display device 40. As illustrated in FIG. 6, the screen of the display device 40 displays an input reception unit 60 that receives an input of 3D data (for example, STL data), a range setting unit 62 for setting an upper limit value and a lower limit value of a heel range and an Achilles tendon range, a specified value setting button 64 for setting the upper limit value and the lower limit value of the heel range and the Achilles tendon range to specified values, a data output unit 66 that displays a file name, and an output button 68.

The foot shape measurement system 11 executes data processing by operating the operation device 42 while viewing the screen of the display device 40. For example, when the upper limit value and the lower limit value of the heel range and the Achilles tendon range displayed in the range setting unit 62 are set to desired values and the 3D data is dropped or pasted to the input reception unit 60, the foot shape measurement system 11 automatically calculates feature parameters (distance, heel index, classification to which heel belongs) related to the shape of the rear portion of the foot together with a representative index such as a foot length, and displays a file name of output data including the calculated data in CSV format on the data output unit 66. When the output button 68 is clicked, the foot shape measurement system 11 downloads the output data to a predetermined file, a storage medium, or the like.

The foot shape measurement system 11 according to the second embodiment calculates a feature parameter that can be used as an index for selecting a ready-made shoe that matches the shape of the rear portion of the foot from the 3D data of the foot already measured and generated.

<Conclusion> As described above, the foot shape measurement system calculates a feature parameter that can be used as an index for selecting a ready-made shoe. By arranging the ready-made shoes according to the index, it is easy to select a ready-made shoe that matches the shape of the rear portion of the foot.

Note that the present invention is not limited to the above embodiment, and can be implemented with various modifications.

For example, the feature parameter related to the shape of the rear portion of the foot calculated by the foot shape measurement system may be used for designing an order shoe. Further, in the above embodiment, the three-dimensional shape is measured by the measurement unit 12, but instead of the data 13 measured by the measurement unit 12, 3D data may be generated from data obtained by image capturing and image analysis. Furthermore, in the foot shape measurement method, the foot length L1 and the distance L2 between the protrusion point P1 and the retraction point P2 may be simultaneously or individually measured using a measuring instrument without using the 3D data generated by measuring the three-dimensional shape of the foot, the heel index may be calculated, and the classification to which the heel index belongs may be determined by a control table.

## Industrial Applicability

According to some aspects of the present disclosure, feature parameters related to the shape of the rear portion of the foot can be calculated. By arranging ready-made shoes using the feature parameter related to the shape of the rear portion of the foot as an index, it is easy to select a ready-made shoe that matches the shape of the rear portion of the foot.

## Reference Signs List

| | |
|---|---|
| 6 | foot |
| 10, 11 | foot shape measurement system |
| 12 | measurement unit |
| 13 | measured data |
| 22 | 3D data generation unit |
| 23 | 3D data |
| 24 | input reception unit |
| 25 | 3D data |
| 26 | feature parameter calculation unit |
| 26a | foot length calculation unit |
| 27 | feature parameter |
| 30 | distance calculation unit |
| 32 | heel index calculation unit |
| 34 | classification determination unit |
| 46 | input reception unit |
| 47 | 3D data |
| 48 | feature parameter calculation unit |
| 49 | feature parameter |
| H | heel index |
| H1 | heel range |
| H2 | Achilles tendon range |
| L1 | foot length |
| L2 | distance |
| P1 | protrusion point |
| P2 | retraction point |

## Claims

1.   A foot shape measurement system comprising:

an input reception unit (24) configured to receive an input of 3D data (23, 25) representing a three-dimensional shape of a foot (6); and
a feature parameter calculation unit (26) configured to calculate a feature parameter of the foot (6) based on the 3D data (23, 25), wherein
the feature parameter calculation unit (26) includes
a distance calculation unit (30) configured to calculate a distance (L2) between a protrusion point (P1) that protrudes most within a heel range (H1) and a retraction point (P2) that retracts most within an Achilles tendon range (H2) in a foot length direction for a rear portion of the foot (6) viewed from a lateral direction.

2.   The foot shape measurement system according to claim 1, wherein

the feature parameter calculation unit (26) further includes
a foot length calculation unit (26a) configured to calculate a foot length (L1) of the foot (6), and
a heel index calculation unit (32) configured to calculate a heel index (H) that is a ratio of the distance to the foot length (L1).

3.   The foot shape measurement system according to claim 2, wherein the feature parameter calculation unit (26) further includes a classification determination unit (34) configured to determine a classification to which the heel index (H) belongs.

4.   The foot shape measurement system according to claim 2 or 3, wherein the distance calculation unit (30) calculates the heel range (H1) and the Achilles tendon range (H2) based on the foot length (L1), and calculates the distance (L2) between the protrusion point (P1) that protrudes most within the calculated heel range (H1) and the retraction point (P2) that retracts most within the calculated Achilles tendon range (H2).

5.   The foot shape measurement system according to any one of claims 1 to 4, further comprising:

a measurement unit (12) configured to measure the three-dimensional shape of the foot (6); and
a 3D data generation unit (22) configured to generate the 3D data (23, 25) representing the three-dimensional shape of the foot (6) based on data measured by the measurement unit (12), wherein
the input reception unit (24) receives an input of the 3D data (23, 25) generated by the 3D data generation unit (22).

6.   A foot shape measurement method for measuring a shape feature of a foot (6), the foot shape measurement method comprising:

> a protrusion point specifying step of specifying a protrusion point (P1) that protrudes most within a heel range (H1) for a rear portion of the foot (6) viewed from a lateral direction;
> a retraction point specifying step of specifying a retraction point (P2) that retracts most within an Achilles tendon range (H2) for the rear portion of the foot (6) viewed from the lateral direction; and
> a distance measuring step of measuring a distance (L2) between the protrusion point (P1) and the retraction point (P2) in a foot length direction, by the distance calculation unit (30).

**7.** The foot shape measurement method according to claim 6, further comprising:

> a foot length calculating step of calculating a foot length (L1) of the foot (6); and
> a heel index calculating step of calculating a heel index (H) that is a ratio of the distance to the foot length (L1).

## Patentansprüche

**1.** Fußform-Messsystem, umfassend:

> eine Eingabe-Empfangseinheit (24), welche dazu eingerichtet ist, eine Eingabe von 3D-Daten (23, 25) zu empfangen, welche eine dreidimensionale Form eines Fußes (6) darstellen; und
> eine Merkmalsparameter-Berechnungseinheit (26), welche dazu eingerichtet ist, auf Grundlage der 3D-Daten (23, 25) einen Merkmalsparameter des Fußes zu berechnen, wobei
> die Merkmalsparameter-Berechnungseinheit (26) umfasst:
> eine Abstand-Berechnungseinheit (30), welche dazu eingerichtet ist, in einer Fußlängenrichtung für einen hinteren Abschnitt des Fußes (6), von einer lateralen Richtung betrachtet, einen Abstand (L2) zwischen einem Vorsprungspunkt (P1), welcher innerhalb eines Fersenbereichs (H1) am weitesten hervorsteht, und einem Rückzugspunkt (P2) zu berechnen, welcher innerhalb eines Achillessehnenbereichs (H2) am weitesten zurückgezogen ist.

**2.** Fußform-Messsystem nach Anspruch 1, wobei die Merkmalsparameter-Berechnungseinheit (26) ferner umfasst:

> eine Fußlänge-Berechnungseinheit (26a), welche dazu eingerichtet ist, eine Fußlänge (L1) des Fußes (6) zu berechnen, und
> eine Fersenindex-Berechnungseinheit (32), welche dazu eingerichtet ist, einen Fersenindex (H) zu berechnen, welcher ein Verhältnis des Abstands zu der Fußlänge (L1) ist.

**3.** Fußform-Messsystem nach Anspruch 2, wobei die Merkmalsparameter-Berechnungseinheit (26) ferner eine Klassifizierung-Bestimmungseinheit (34) umfasst, welche dazu eingerichtet ist, eine Klassifizierung zu bestimmen, zu welcher der Fersenindex (H) gehört.

**4.** Fußform-Messsystem nach Anspruch 2 oder 3, wobei die Abstand-Berechnungseinheit (30) den Fersenbereich (H1) und den Achillessehnenbereich (H2) auf Grundlage der Fußlänge (L1) berechnet und den Abstand (L2) zwischen dem Vorsprungspunkt (P1), welcher innerhalb des berechneten Fersenbereichs (H1) am weitesten hervorsteht, und dem Rückzugspunkt (P2) berechnet, welcher innerhalb des berechneten Achillessehnenbereichs (H2) am weitesten zurückgezogen ist.

**5.** Fußform-Messsystem nach einem der Ansprüche 1 bis 4, ferner umfassend:

> eine Messeinheit (12), welche dazu eingerichtet ist, die dreidimensionale Form des Fußes (6) zu messen; und
> eine 3D-Daten-Erzeugungseinheit (22), welche dazu eingerichtet ist, die 3D-Daten (23, 25), welche die dreidimensionale Form des Fußes (6) darstellen, auf Grundlage von Daten zu erzeugen, welche von der Messeinheit (12) gemessen worden sind, wobei
> die Eingabe-Empfangseinheit (24) eine Eingabe der 3D-Daten (23, 25) empfängt, welche von der 3D-Daten-Erzeugungseinheit (22) erzeugt worden sind.

**6.** Fußform-Messverfahren zum Messen eines Formmerkmals eines Fußes (6), wobei das Fußform-Messverfahren umfasst:

> einen Vorsprungspunkt-Spezifizierungsschritt eines Spezifizierens eines Vorsprungspunkts (P1), welcher innerhalb eines Fersenbereichs (H1) am weitesten hervorsteht, für einen hinteren Abschnitt des Fußes (6), von einer lateralen Richtung betrachtet;
> einen Rückzugspunkt-Spezifizierungsschritt eines Spezifizierens eines Rückzugspunkts (P2), welcher innerhalb eines Achillessehnenbereichs (H2) am weitesten zurückgezogen ist, für den hinteren Abschnitt des Fußes (6), von der lateralen Richtung betrachtet; und
> einen Abstand-Messschritt eines Messens eines Abstands (L2) zwischen dem Vorsprungspunkt (P1) und dem Rückzugspunkt (P2) in einer Fußlängenrichtung durch die Abstand-Berechnungseinheit (30).

7. Fußform-Messverfahren nach Anspruch 6, ferner umfassend:

einen Fußlänge-Berechnungsschritt eines Berechnens einer Fußlänge (L1) des Fußes (6); und

einen Fersenindex-Berechnungsschritt eines Berechnens eines Fersenindexes (H), welcher ein Verhältnis des Abstands zu der Fußlänge (L1) ist.

**Revendications**

1. Système de mesure de la forme du pied, comprenant :

une unité de réception d'entrée (24) configurée pour recevoir une entrée de données 3D (23, 25) représentant une forme tridimensionnelle d'un pied (6) ; et

une unité de calcul de paramètres caractéristiques (26) configurée pour calculer un paramètre caractéristique du pied (6) sur la base des données 3D (23, 25), l'unité de calcul de paramètres caractéristiques (26) comprenant

une unité de calcul de distance (30) configurée pour calculer une distance (L2) entre un point en saillie (P1) qui dépasse le plus au sein d'une zone de talon (H1) et un point en retrait (P2) qui se retire le plus au sein d'une zone de tendon d'Achille (H2) dans la direction de la longueur du pied pour une partie arrière du pied (6) vue depuis une direction latérale.

2. Système de mesure de la forme du pied selon la revendication 1,

dans lequel l'unité de calcul de paramètres caractéristiques (26) comprend en outre

une unité de calcul de longueur de pied (26a) configurée pour calculer une longueur (L1) du pied (6), et

une unité de calcul d'indice de talon (32) configurée pour calculer un indice de talon (H) qui est un rapport entre la distance et la longueur (L1) du pied.

3. Système de mesure de la forme du pied selon la revendication 2,
dans lequel l'unité de calcul de paramètres caractéristiques (26) comprend en outre une unité de détermination de classification (34) configurée pour déterminer une classification à laquelle appartient l'indice de talon (H).

4. Système de mesure de la forme du pied selon la revendication 2 ou 3,

dans lequel l'unité de calcul de distance (30) calcule la zone de talon (H1) et la zone de tendon d'Achille (H2) sur la base de la longueur (L1) du pied, et

calcule la distance (L2) entre le point en saillie (P1) qui dépasse le plus au sein de la zone de talon calculée (H1) et le point en retrait (P2) qui se retire le plus au sein de la zone de tendon d'Achille calculée (H2).

5. Système de mesure de la forme du pied selon l'une des revendications 1 à 4, comprenant en outre :

une unité de mesure (12) configurée pour mesurer la forme tridimensionnelle du pied (6) ; et

une unité de génération de données 3D (22) configurée pour générer les données 3D (23, 25) représentant la forme tridimensionnelle du pied (6) sur la base des données mesurées par l'unité de mesure (12),

dans lequel

l'unité de réception d'entrée (24) reçoit une entrée des données 3D (23, 25) générées par l'unité de génération de données 3D (22).

6. Procédé de mesure de la forme du pied destiné à mesurer une caractéristique de forme d'un pied (6), ledit procédé de mesure de la forme du pied comprenant :

une étape de spécification d'un point en saillie consistant à spécifier un point en saillie (P1) qui dépasse le plus au sein d'une zone de talon (H1) pour une partie arrière du pied (6) vue depuis une direction latérale ;

une étape de spécification d'un point en retrait consistant à spécifier un point en retrait (P2) qui se retire le plus au sein d'une zone de tendon d'Achille (H2) pour la partie arrière du pied (6) vue depuis la direction latérale ; et

une étape de mesure de distance consistant à mesurer une distance (L2) entre le point en saillie (P1) et le point en retrait (P2) dans une direction de longueur du pied par l'unité de calcul de distance (30).

7. Procédé de mesure de la forme du pied selon la revendication 6, comprenant en outre :

une étape de calcul de longueur de pied consistant à calculer une longueur (L1) du pied (6) ; et

une étape de calcul d'indice de talon consistant à calculer un indice de talon (H) qui est un rapport entre la distance et la longueur (L1) du pied.

# Fig.1

# Fig.2

26

```
┌──────────────────────────────────────┐
│   ┌────────────────────────────┐      │
│   │     FOOT LENGTH            │──── 26a│
│   │   CALCULATION UNIT         │      │
│   └────────────────────────────┘      │
│                                        │
│   ┌────────────────────────────┐      │
│   │   FOOT CIRCUMFERENCE       │──── 26b│
│   │   CALCULATION UNIT         │      │
│   └────────────────────────────┘      │
│                                        │
│   ┌────────────────────────────┐      │
│   │     FOOT WIDTH            │──── 26c│
│   │   CALCULATION UNIT         │      │
│   └────────────────────────────┘      │
│                                        │
│   ┌────────────────────────────┐      │
│   │     HEEL WIDTH           │──── 26d│
│   │   CALCULATION UNIT         │      │
│   └────────────────────────────┘      │
│                                        │
│   ┌────────────────────────────┐      │
│   │     DISTANCE             │──── 30 │
│   │   CALCULATION UNIT         │      │
│   └────────────────────────────┘      │
│                                        │
│   ┌────────────────────────────┐      │
│   │     HEEL INDEX           │──── 32 │
│   │   CALCULATION UNIT         │      │
│   └────────────────────────────┘      │
│                                        │
│   ┌────────────────────────────┐      │
│   │   CLASSIFICATION          │──── 34 │
│   │   DETERMINATION UNIT       │      │
│   └────────────────────────────┘      │
│                                        │
│   ┌────────────────────────────┐      │
│   │   PROTRUSION POINT        │──── 36 │
│   │ HEIGHT CALCULATION UNIT    │      │
│   └────────────────────────────┘      │
└──────────────────────────────────────┘
```

# Fig.3

(a)

(b)

# Fig.4

## YOUR FOOT MEASUREMENT RESULT

MEASUREMENT DATE 202▮/▮/▮ ▮▮▮▮

MEASUREMENT No. ▮▮▮▮

### CUSTOMER INFORMATION

● WOMAN   ● * YEARS AND * MONTHS OLD   ● STANDING POSITION

### LEFT FOOT

SOLE CONTOUR LINE

FOOT CIRCUMFERENCE
SMALL ← CIRCUMFERENCE → LARGE
JIS SIZE
A  B  C  D  E  2E  3E  4E  F
VERY LARGE

SMALL ← FOOT WIDTH → LARGE
JIS SIZE
A  B  C  D  E  2E  3E  4E  F
VERY LARGE

TALUS ● ANGLE ●
3.0°

5TH TOE ● SIDE ANGLE ●
10.4°

1ST TOE ● SIDE ANGLE ●
11.6°

FOOT CIRCUMFERENCE ●
26.5cm

● FOOT WIDTH ●
10.8cm

● FOOT LENGTH ●
25.2cm

**HEEL INDEX**
4% DETERMINED AS B

JIS STANDARD WIDTH SIZE
F

HEEL ● WIDTH ●
6.8cm

● MEMO ●

### RIGHT FOOT

1ST TOE ● SIDE ANGLE ●
15.2°

5TH TOE ● SIDE ANGLE ●
8.4°

FOOT CIRCUMFERENCE ●
26.1cm

● FOOT WIDTH ●
10.8cm

● FOOT LENGTH ●
25.8cm

**HEEL INDEX**
3% DETERMINED AS B

JIS STANDARD WIDTH SIZE
4E

HEEL ● WIDTH ●
6.9cm

LEFT FOOT VOLUME 992.9cm³   RIGHT FOOT VOLUME 994.5cm³

SOLE CONTOUR LINE

FOOT CIRCUMFERENCE
SMALL ← CIRCUMFERENCE → LARGE
JIS SIZE
A  B  C  D  E  2E  3E  4E  F
VERY LARGE

SMALL ← FOOT WIDTH → LARGE
JIS SIZE
A  B  C  D  E  2E  3E  4E  F
VERY LARGE

TALUS ● ANGLE ●
3.1°

EP 4 349 205 B1

Fig.5

**Fig.6**

DISTANCE BETWEEN HEEL AND ACHILLES TENDON

60 — DROP STL FILE HERE.

DISTANCE (mm). FILE NAME. FOLDER NAME
8.07,331000010_left,F:¥

66

HEEL RANGE (mm)

62 — | 2 | ~ | 40 |

ACHILLES TENDON RANGE (mm)

| 40 | ~ | 80 |

64 — SET TO SPECIFIED VALUE

68

OUTPUT IN CSV

*Fig.7*

# Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003108831 A

- US 2017270709 A1